Europäisches Patentamt

European Patent Office

Office européen des brevets

(11) Publication number: **0 244 923**
**A2**

## (12) EUROPEAN PATENT APPLICATION

(21) Application number: 87300525.0

(51) Int. Cl.⁴: **H02K 15/095** , H02K 3/04

(22) Date of filing: 21.01.87

(30) Priority: 08.05.86 US 860801

(43) Date of publication of application:
**11.11.87 Bulletin 87/46**

(84) Designated Contracting States:
**BE CH DE FR GB IT LI SE**

(71) Applicant: **Century Electric, Inc.**
**1831 Chestnut Street P.O. Box 187**
**St. Louis Missouri 63166(US)**

(72) Inventor: **Sisk, Hollis D.**
**329 Ridgemeadow Drive**
**Chesterfield Missouri 63017(US)**

(74) Representative: **Barrett, James William et al**
**A.A. THORNTON & CO. Northumberland**
**House 303-306 High Holborn**
**London WC1V 7LE(GB)**

(54) Method of winding a field coil with flattened round wire and field coil produced by said method.

(57) A method for flattening round wire and winding a main field coil with the round wire includes the steps of feeding a length of round wire through a pair of non-driven pinch rollers to impart a predetermined degree of flattening such that as the wire is wrapped around the rotating main field, it can be laid into the trough in precision manner with successive turns vertically aligned. The flattened round wire is laid into the trough with the flat of the wire parallel to the bottom of the trough to increase the stability of the winding, and to facilitate the vertical alignment of successive layers.

EP 0 244 923 A2

# METHOD OF WINDING A FIELD COIL WITH FLATTENED ROUND WIRE AND FIELD COIL PRODUCED BY SAID METHOD

## Background and Summary

There are several different types of wire which are commonly used to wind the main field coils for a rotating main field as is typically used in a dynamoelectric machine. Typically, a round wire is used and is wound around the poles of the main field by turning the main field as wire is payed off of a reel, with multiple turns comprising a layer, and multiple layers comprising a winding. Each pole generally has a wiring channel or trough along its sides which has a square or rectangular cross-section and within which the wire is placed as it is wound around the pole. Typically, each layer extends from one side wall of the trough and fills in the trough with a space approximating one-half the diameter of the wire size left near the other side wall so that the first turn of the next layer can nest between the last turn and the side wall as the wire is wound back in the reverse direction, the turns in the second layer fitting within the cradle formed between adjacent turns of the lower layer. This precision wiring technique is well known in the art and results in air spaces or gaps which are not filled with wire, including a space at the side of each layer equal to approximately half a wire diameter. Of course, these air spaces represent pockets of insulating air which tend to decrease the ability of the winding to dissipate heat thereby decreasing its capacity. Furthermore, as the air space is non-conductive, the electromagnetic capacity of the winding and, hence, the machine is reduced over that which would be achieved should those air gaps be filled with copper.

As an improvement over round wire, square wire is available at approximately a 25% greater cost, and square wire can be laid in to virtually entirely fill the trough from side wall to side wall and eliminate much of the air space. However, the increased expense of square or rectangular wire is substantial and results from the increased manufacturing expense to form square wire. Therefore, square wire is typically not used except for specific applications wherein it is required or desirable to maximize the capacity of the machine at this greater expense.

It is known in the art that flattened round wire, i.e. round wire which is fed between a pair of driven pinch rollers, can be used to increase the amount of copper wound in a particular space in a transformer. Typically, these transformers have a square bobbin such that the bobbin and the driven pinch rollers can be easily synchronized in speed to achieve the necessary flattening and also eliminate the problem of tensioning the wire which could damage the insulating film thereon. However, the use of flattened round wire has never been considered possible for winding a generally rectangular main field coil for a dynamoelectric machine because of the problem of synchronizing the required speed of the wire as it wraps around the rotating rectangular main field coil with the driven pinch rollers. As can be appreciated, the speed of the wire fluctuates rather dramatically as the rectangular main field is rotated, alternately accelerating and then decelerating, thereby introducing a serious problem in synchronizing the driven rollers with the speed of the main field coil.

In addition to the problem of synchronizing the speed of the driven rollers with the winding speed of the main field coil, further synchronization must be achieved to accomodate an additional step in the winding method. Typically, a series of sharply angled pulleys have been used to impress a "reverse bend" in the copper wire and to harden the soft copper wire so that as the main field coil turns, the copper wire snugs up against the lamination at the corners to improve the fit between the wound coil and the pole. This series of pulleys provides an increased tension, introduces some limited amount of stretching in the wire, and also tends to harden the wire, all of which would serve to further complicate the problem of synchronizing the driven pinch rollers with that of wire as it is wound about the rotating main field coil. Therefore, although it has been contemplated to wind rectangular main field coils with flattened round wire, the serious problems which were thought to exist have prevented others from fulfilling this long felt need.

The inventor herein has succeeded in solving these problems of the prior art and has developed a method of flattending the round wire utilizing nondriven pinch rollers which flatten it as it is payed off the reel and before it traverses the series of pulleys which impress the wire with a reverse bend. By utilizing non-driven pinch rollers, the problem of synchronizing their speed with the wire as it is forms the main field coil has been completely eliminated. Furthermore, it has been found that the tension required to impress the reverse bend in the copper wire is sufficient to draw the round wire through the pinch rollers. As a bonus, the additional hardness of the copper wire caused by the working of the wire by the pinch rollers actually improves the forming of the winding as the wire has a greater tendency to take on the reverse bend and snug up against the laminations. With the method of the present invention, the round wire can be flattened with virtually no increase in expense as the main field coil is wound. No additional man hours are required, no special set-up is required, and no additional winding time is experienced. The flattening process happens as the wire is payed off of the reel and is transparent to the operator of the winding machine.

In forming the main field coil winding with the present invention, the degree of flattening of the wire is predetermined to obtain a wire which has a cross-section of virtually a rectangle as it has been found that as the wire is flattened, the radius of curvature of the short sides of the wire lengthens. This facilitates the close placing of adjacent turns within each layer and improves the density of the copper for each layer as well. By knowing the trough dimensions, the wire can be flattened to achieve a width which causes the layer to extend from one side wall to the other to thereby eliminate the half wire spacing required in windings with round wire. The inventor has flattened round wire to approximately 60% of its original diameter with no damage to the wire or its insulating film. Furthermore, because of the flat sides achieved with the flattening process, the turns of successive layers can be vertically aligned. This not only helps eliminate air pockets which act as insulators to increase the tendency of the winding to heat up and thus reduce its capacity, but also permits greater surface contact between successive layers to improve the heat transfer through the winding to thereby increase the rating of the winding. To further minimize the effects of heat, the coil heads may be wound with air vents in the manner disclosed and claimed in applicant's prior U.S. patents No. 4,554,475 and Serial No. 547,576, now U.S. patent No. """", both of which are commonly owned by the assignee of the present invention.

As can be appreciated, there are significant commercial advantages to be achieved by utilizing flattened round wire and at virtually no in creased cost over winding with round wire. As the main field is the limiting element in determining the capacity of a dynamoelectric machine, increasing the density of copper wound into each field coil dramatically increases the capacity of the machine. For example, the inventor herein has taken the existing 125 K.W. capacity generator main field laminations and wound them with flattened round wire to achieve a main field coil capable of a 150 K.W. rating. Similarly, a 300 K.W. main field has been wound with flattened round wire to yield a 350 K.W. rating. A third example is a 620 K.W. main field which has been wound with flattened round wire to achieve a 700 K.W. rating. These increased capacities represent an approximate 14% increase for virtually no increased expense over that of a dynamoelectric machine wound with round wire, other than the minimal cost of additional copper wire. With this technique, it is believed that the capacity rating for each of the generators made and sold by the assignee of the present invention can be increased by one Nema step. This is significant for the further reason that existing lamination sizes can be utilized to achieve these increased ratings. As is well known in the art, the size of laminations is generally predetermined and there is a significant expense involved in changing lamination sizes. With the present invention, existing laminations can be used. Because of the expense involved in changing lamination sizes, many dynamoelectric machines are presently utilizing laminations sized to accomodate random winding of main field coils, despite the fact that precision winding of main field coils has become commmon. Thus, the present invention represents a significant step forward in increasing the capacity of existing designs with out requiring a redesign of lamination sizes which would involve tremendous expense.

While the foregoing has been a brief description of some of the principal advantages and features of the present invention, a more complete understanding may be obtained by referring to the drawings and the description of the referred embodiment which follows.

Brief Description of the Drawings

Figure 1 is a diagramatic representation of a winding machine used to flatten round wire and wind a main field coil utilizing the present invention;

Figure 2 is a side view of a main field;

Figure 3 is a cross-sectional view taken along the plane of Line 3-3 in Figure 2 and detailing the main field coil wound into the trough;

Figure 4 is a partial cross-sectional view of the winding shown in Figure 3 detailing the vertical alignment of successive layers; and

Figure 5 is a partial cross-sectional view of a winding of the prior art utilizing round wire.

Detailed Description of the Preferred Embodiment

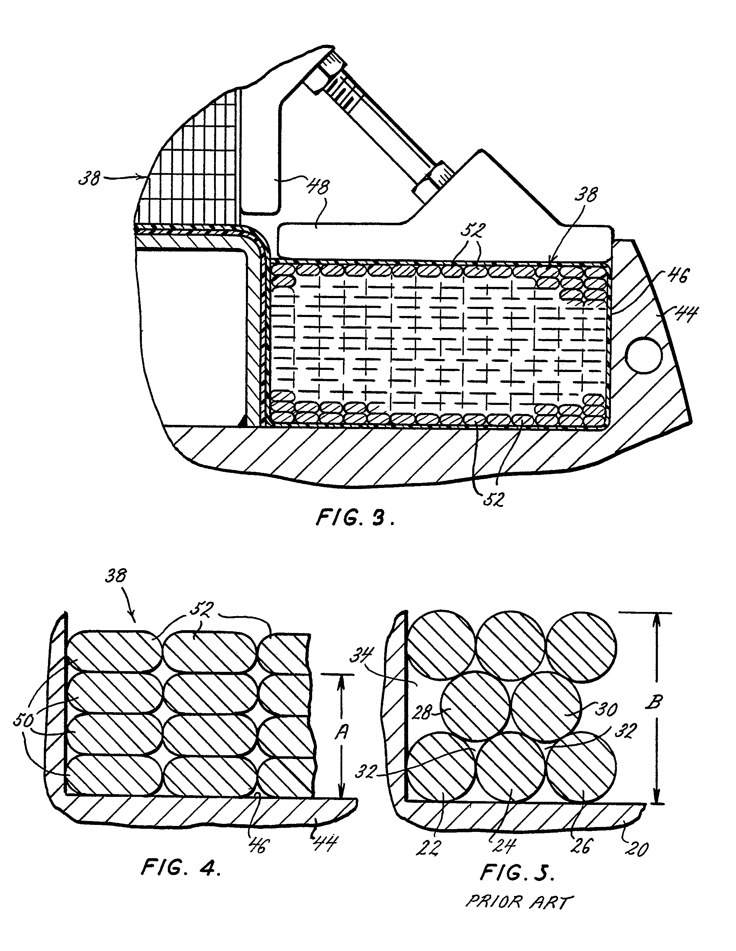

A cross-sectional view of a winding of the prior art utilizing round wire is best shown in Fig. 5. As detailed therein, the wiring trough 20 has a generally rectangular cross-section (although only one side of the trough 20 is shown), and turns 22, 24, 26 are laid into the bottom of the trough 20 to form the first layer. The next layer, comprising turns 28, 30 are laid into the crevice 32 formed between the adjacent turns 22, 24, 26 of the first layer. To achieve this, and air gap 34 which is approximately one half the diameter of the wire is was ted in each layer to accomodate this precision winding, and nesting of successive layers within the crevices 32 between turns of wire. This technique is commonly used in the art, and represents the typical winding pattern for precision winding a main field coil with round wire.

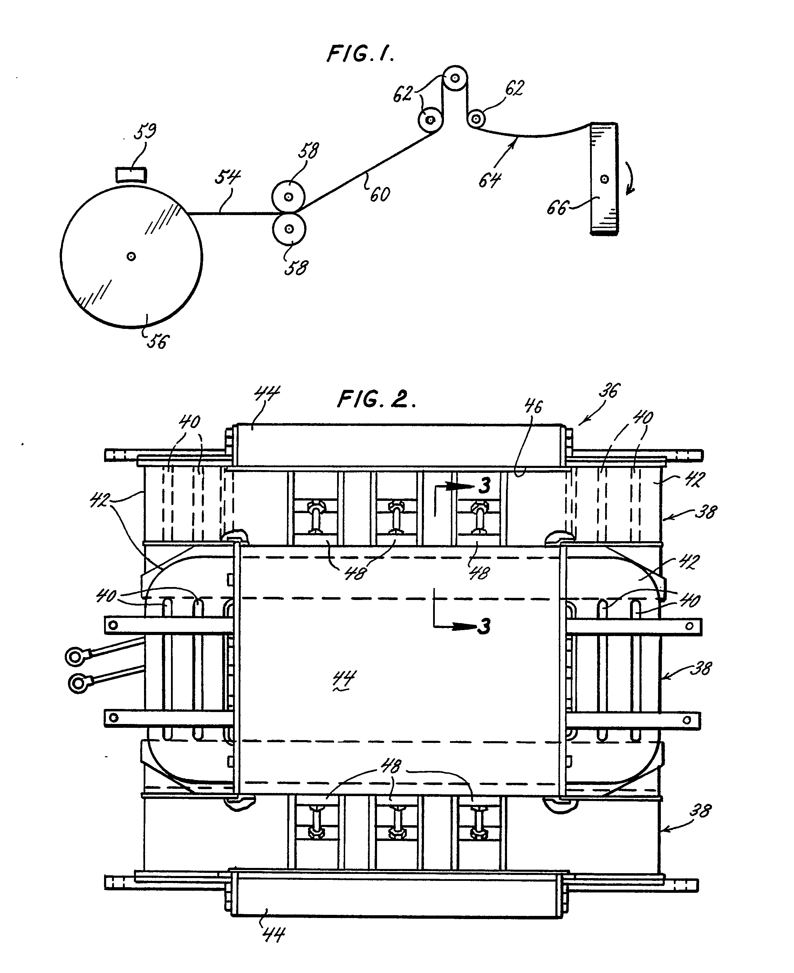

As best shown in Fig. 2-4, a main field 36 may have a plurality of main field coils 38, and air gaps 40 may be formed in the heads 42 of each main field coil 38. As shown in greater detail in Figs. 3 and 4, each pole 44 has a wiring box or trough 46 along the sides thereof within which the main field coil 38 is wound. One or more clamps 48 may be used to compress the main field coil 38 within the trough 46 to minimize vibration or the like as the main field coil is rotated within the dynamoelectric machine. As shown in Fig. 4, each layer 50 is comprised of a plurality of turns of flattened round wire 52, with successive layers being stacked in a vertical aligned manner to both maximize the density of wire 52 placed within each trough 46, and improve the heat transfer characteristic between successive layers 50 of the winding 38. The turns of wire 52 are laid into the trough 46 with their length dimension abutting the bottom of the trough 46 for added stability.

As best shown in Fig. 1, the method of winding a main field coil with flattened round wire may be achieved by paying a length of round wire 54 from a reel 56 through a pair of pinch rollers 58, pinch rollers 58 being adjustable with eccentric shafts or the like to adjust the amount of flattening imparted to the round wire 54 as it is pulled therethrough. A brake 59 is used to adjust the tension in the wire as it is wound. After flattening, the flattened round wire 60 is fed through a series of three sharply angled pulleys 62 which impart a reverse bend to the flattened round wire 60 as is shown diagrammatically in Fig. 1, at 64. By working the wire with pulleys 58 and 62, it has a tendency to harden which, as known in the art, helps form the coil around the main field 66 as it rotates.

There are various changes and modifications which may be made to the invention as would be apparent to those skilled in the art. However, these changes or modifications are included in the teaching of the disclosure, and it is intended that the inven toin be limited only by the scope of the claims appended hereto.

## Claims

1. In a dynamoelectric machine having a rotating main field with at least a pair of poles, the improvement comprising a field coil wound about each of said poles comprised of a plurality of turns of flattened round wire wherein each pole has means defining a generally rectangular trough formed in the sides of said pole in which its associated field coil is wound, said trough having a cross-sectional shape of a flat bottom and two generally perpendicular sidewalls, said flattened round wire being wound into said trough so that each turn has its flattened side parallel to the bottom of the trough.

2. The device of Claim 1 wherein the field coil is comprised of a plurality of layers, each layer being comprised of a plurality of turns, successive turns being adjacent each other and extending substantially from one sidewall of the trough to the other sidewall and wherein said plurality of layers are wound atop each other with each turn of the upper layers would substantially atop a turn of a lower layer.

3. The device of Claim 2 wherein each of said field coils has a head at each end thereof, and further comprising means forming air vents in said coil heads.

4. The device of Claim 1 wherein said wire is flattened by a pair of pinch rollers as the wire is payed off a spool and prior to being wound onto the main field and wherein a reverse bend is impressed into the wire after it is flattened and before it is wound onto the main field.

5. A rotating main field with at least one pair of poles for a dynamoelectric machine, each pole having a trough formed along the sides thereof, and each pole having a field coil comprising a plurality of turns of wire wound around said pole and laid into said trough, said wire being round wire flattened before being wound about said pole.

6. The device of Claim 5 wherein the round wire is flattened by being drawn between a pair of non-driven pinch rollers.

7. The device of Claim 6 wherein said wire is precision wound in layers within said trough, said wire being sized and flattened so that each layer substantially fills the width between the sides of the trough, and successive layers have turns substantially aligned with the turns of the preceding layers.

8. A method for winding a main field coil for a dynamoelectric machine comprising the steps of: flattening a length of round wire by drawing the round wire through a pair of non-driven rollers, and winding said flattened wire about a pole of said main field coil.

9. The method of Claim 8 further comprising the step of impressing a reverse bend into the wire before winding it about the pole by running the wire under tension about a plurality of pulleys.

10. The method of Claim 9 further comprising the step of paying the round wire from a reel of wire and into the flattened rollers and wherein the step of winding includes precision winding the flattened wire about the pole.

FIG. I.

FIG. 2.

0 244 923

FIG. 3.

FIG. 4.

FIG. 5.

PRIOR ART